# EUROPÄISCHE PATENTSCHRIFT

(11) **EP 1 495 272 B1**
(45) Veröffentlichungstag und Bekanntmachung des Hinweises auf die Patenterteilung: **12.11.2008**
(21) Anmeldenummer: 03725025.5
(22) Anmeldetag: 15.04.2003
(51) Int. Cl.: F25B 17/08, F25B 35/04, F25B 30/04

(54) **FESTSTOFF-SORPTIONSWÄRMEPUMPE**
SOLID SUBSTANCE SORPTION HEAT PUMP
POMPE A CHALEUR A SORPTION SOLIDE

(30) Priorität: 18.04.2002 DE 10217443
(43) Veröffentlichungstag der Anmeldung: 12.01.2005
(73) Patentinhaber: SorTech AG, 79108 Freiburg (DE)
(72) Erfinder: HENNING, Hans-Martin, 79100 Freiburg (DE)
(74) Vertreter: Weitzel, Wolfgang
(86) Internationale Anmeldenummer: PCT/EP2003/003880
(87) Internationale Veröffentlichungsnummer: WO 2003/087682

(56) Entgegenhaltungen:
- EP-A- 0 892 225
- EP-A- 1 150 077
- DE-A- 4 019 669
- DE-A- 4 405 669
- DE-C- 585 880
- FR-A- 2 539 854
- FR-A- 2 604 100
- GB-A- 2 125 154
- US-A- 5 168 708
- US-A- 6 102 107

## Beschreibung

Die Erfindung betrifft eine Feststoff-Sorptionswärmepumpe und ein Heizungssystem mit einer Feststoff-Sorptionswärmepumpe. Dokument DE-A-4 019 669 offenbart eine Feststoff-Sorptionswärmepumpe gemäss den Oberbegriffen der Ansprüche 1 und 11.

Es ist bekannt, thermisch angetriebene Wärmepumpen auf der Basis von Feststoffadsorption für Heizungs- und Kühlungszwecke zu verwenden. Übliche Arbeitsstoffpaare - Sorptionsmaterial und Adsorbat - sind beispielsweise Zeolith und Wasser, wobei das Arbeitsgas Wasser im Niederdruckbereich betrieben wird. Adsorptionswärmepumpen mit einem solchen Arbeitsstoffpaar sind beispielsweise in der DE 199 61 629 und DE 100 38 636 offenbart.

Es sind jedoch auch Arbeitsstoffpaare, die im Hochdruckbereich betrieben werden, bekannt. Beispielsweise seien Salzammoniakate-Ammoniak genannt, wie sie zum Beispiel in der US 4.694.659 offenbart sind.

An Feststoff-Sorptionswärmepumpen werden verschiedene technische Anforderungen gestellt. Besonders wesentlich sind die Forderungen nach einem hohen Wärmeverhältnis, einer hohen Leistungsdichte und einer einfachen Regelbarkeit der Wärmeabgabe. Das Wärmeverhältnis der Nutzwärme zur Antriebswärme (auch COP: Coefficent of Perfomance) hängt im wesentlichen von den Anteilen des sorptiven und des sensiblen Wärmeumsatzes während eines Wärmepumpenzyklus ab. Unter sorptivem Umsatz versteht man die Freisetzung der bei der Adsorption des Arbeitsgases entstehende beziehungsweise die Aufnahme der zur Desorption benötigte Sorptionswärme, wohingegen der sensible Wärmeumsatz den Energieumsatz beschreibt, der bei der Aufheizung beziehungsweise Abkühlung des gesamten Systems auftritt.

Nimmt man idealerweise an, dass die sensible Wärme vernachlässigbar klein ist, wird das maximal mögliche Wärmeverhältnis mit einem bestimmten Arbeitsstoffpaar erreicht. Für Silikagel-Wasser liegt dieses für eine einstufige Wärmepumpe typischerweise bei ca. 180%. Diese Prozentzahl setzt sich zusammen aus 100 Prozent Nutzwärme, die aus der Antriebswärme gewonnen wird, bei gleichzeitiger vollständiger Desorption des Adsorbats. Der zweite Anteil von 80 Prozent kann in Form von Nutzwärme abgegeben werden, bei der anschließenden Abkühlung des Adsorbers und der Adsorption des Adsorbats im Sorptionsmaterial.

Um besonders hohe Wärmeverhältnisse zu erreichen, wurden thermodynamisch immer ausgereiftere Systeme entwickelt, wobei insbesondere durch die Anordnung einer Vielzahl von Adsorbern beziehungsweise Desorbern, welche nacheinander vom Wärmeträger durchströmt werden und in einer Vielzahl von Zyklen geschaltet werden, eine möglichst hohe Wärmerückgewinnung angestrebt wird, die das Verhältnis zwischen sorptivem und sensiblem Umsatz verbessert. Nachteilig an diesen Systemen sind jedoch der erhebliche technische Aufwand, die Störanfälligkeit und die hohen Herstellungs- und Wartungskosten.

Die Offenlegungsschrift DE 199 02 695 A1 zeigt eine Sorptionswärmepume, bei der ein Ad-/Desorber-Wärmetauscher zusammen mit einem Verdampfer und einem Kondensator, die zu einem Verdampfer/Kondensator-Wärmetauscher integriert sind, in einem gemeinsamen vakuumdichten Behälter angeordnet sind.

Der Erfindung liegt die Aufgabe zugrunde, eine Feststoff-Sorptionswärmepumpe mit einem hohen Wärmeverhältnis und ein Heizungssystem anzugeben, welche gegenüber dem Stand der Technik verbessert sind.

Diese Aufgabe wird durch eine Feststoff-Sorptionswärmepumpe beziehungsweise ein Heizungssystem gemäß der unabhängigen Ansprüche gelöst. Die abhängigen Ansprüche beschreiben besonders vorteilhafte Ausgestaltungen.

Der Erfinder hat erkannt, dass die herkömmlichen Feststoff-Sorptionspumpen zwar hinsichtlich des thermodynamischen Prozesses durch die kaskadenförmige Verschaltung mehrere Adsorber beziehungsweise Desorber verbessert sind, gleichzeitig aber auch durch den notwendigen Einbau von Rohren, Ventilen und Pumpen für den inneren Wärmeaustausch zusätzliche Kapazitäten und Wärmeverluste in den Gesamtapparat eingebracht werden, welche wiederum die Effizienz der Wärmerückgewinnung reduzieren. Die erfindungsgemäße Wärmepumpe zeichnet sich durch einen besonders einfachen Aufbau aus, der zum einen die Herstellungskosten reduziert und die Störanfälligkeit deutlich verringert. Zum anderen kann durch den erfindungsgemäßen Aufbau die Wärmekapazität des gesamten Apparates außerordentlich gering gehalten werden, so dass der sensible Wärmeumsatz entsprechend gering ausfällt.

Bei einer erfindungsgemäßen Feststoff-Sorptionswärmepumpe ist eine Adsorber-Desorber-Einheit und eine Kondensator-Verdampfer-Einheit in einem gemeinsamen Gehäuse angeordnet und durch ein adsorptivdurchlässiges Element voneinander getrennt. In der Gasphase wird der Arbeitsstoff als Adsorptiv bezeichnet und in der adsorbierten, flüssigen Phase als Adsorbat. Man könnte daher auch allgemein von einem dampfdurchlässigen Element sprechen. Das Gehäuse ist gegenüber der Umgebung abgedichtet.

Die Adsorber-Desorber-Einheit umfasst einen Wärmetauscher, zum Übertragen von Wärme von einem Wärmeträger, der durch den Wärmetauscher strömt, auf das Feststoff-Sorptionsmaterial beziehungsweise vom Feststoff-Sorptionsmaterial auf den Wärmeträger.

Verdampfer und Kondensator der erfindungsgemäßen Feststoff-Sorptionswärmepumpe sind als ein Bauteil - Kondensator-Verdampfer-Einheit - ausgeführt. Mittels der Kondensator-Verdampfer-Einheit kann einerseits das dampfförmige Adsorptiv kondensiert werden und dabei die Kondensationswärme auf ein Wärmemedium zur Weiterleitung in eine Heizeinrichtung übertragen werden und andererseits Wärme aus einer Niedertemperaturquelle dem flüssigen Arbeitsstoff zur Verdampfung zugeführt werden.

Die Kondensator-Verdampfer-Einheit ist vorteilhaft im gemeinsamen Gehäuse unterhalb der Adsorber-Desorber-Einheit angeordnet und das adsorptivdurchlässige Element als ein dampfdurchlässiger Schwamm ausgebildet, welcher die Funktion eines Abstandshalters mit Dampfkanälen hat. Insbesondere ist die Verwendung eines Keramik-Schwammes als adsorptivdurchlässiges Element geeignet.

Um erfindungsgemäß einen Aufbau mit einer besonders geringen Wärmekapazität zu erreichen, umfasst die Adsorber-Desorber-Einheit einen wärmeleitenden Aufnahmekörper, der in wärmeleitender Verbindung mit dem Wärmetauscher steht. Der Aufnahmekörper erfüllt zwei Funktionen, nämlich einerseits die Wärmeübertragung zwischen Wärmetauscher und Sorptionsmaterial und andererseits die Herstellung einer stabilen Struktur der Adsorber-Desorber-Einheit. Mit dieser stabilen Struktur ist es nämlich möglich, die Wandung des gemeinsamen Gehäuses besonders dünn auszuführen, da diese der Baueinheit der Sorptionswärmepumpe keine zusätzliche Stabilität mehr verleihen muss, sondern lediglich zur Abdichtung des Innenraumes mit der Adsorber-Desorber-Einheit und der Kondensator-Verdampfer-Einheit gegenüber der Umgebung dient. Die Außenwand kann beispielsweise als Blechummantelung ausgeführt sein mit einer Wandstärke von 0,5 Millimetern oder weniger, insbesondere von 0,1 bis 0,5 Millimetern, die von außen auf die Adsorber-Desorber-Einheit beziehungsweise Kondensator-Verdampfer-Einheit aufgelegt oder abgestützt ist. Es sind aber auch aus beispielsweise schweißtechnischen Gründen größere Wandstärken denkbar. Beispielsweise kann die Wandstärke dafür 1,5 Millimeter oder weniger betragen. Besonders vorteilhaft umfasst auch die Kondensator-Verdampfer-Einheit einen gleichartigen Aufnahmekörper mit der Doppelfunktion des Übertragens von Wärme zwischen Arbeitsstoff und zugeführtem/abgeführtem Wärmeträger und des Herstellens einer stabilen Struktur.

Für den Aufbau des Aufnahmekörpers sind insbesondere zwei Ausführungen geeignet. Die erste Ausführung umfasst eine Lamellenkonstruktion, die um den Wärmetauscher der Adsorber-Desorber-Einheit angeordnet ist. Zwischen die einzelnen Lamellen ist das Feststoff-Sorptionsmaterial eingebracht, derart, dass ein möglichst hoher Wärmeübergang vom Wärmetauscher auf das Sorptionsmaterial erreicht wird. Insbesondere sind handelsübliche Lamellenwärmetauscher verwendbar, wobei vorteilhafterweise die Lamellen senkrecht angeordnet sind und Bohrungen für den Dampftransport des Sorptionsmaterials aufweisen.

Das Feststoff-Sorptionsmaterial ist in einer Ausführung als Schüttung zwischen die Lamellen der Lamellenkonstruktion eingebracht. Sofern die Lamellen senkrecht angeordnet-sind und mit Bohrungen versehen sind, strömt der Dampf im wesentlichen waagerecht. Die Kanäle, welche durch die Bohrungen ausgebildet werden, stellen eine Art Verteiler dar, um den Dampf gleichmäßig in das Sorptionsmaterial zu verteilen (Adsorption) beziehungsweise um den Dampf aus dem Sorptionsmaterial zu sammeln (Desorption). Dabei ist der Strömungswiderstand der Dampfströmung durch die Bohrungen beziehungsweise durch die von den Bohrungen ausgebildeten Kanäle verglichen zu dem Strömungswiderstand der Dampfströmung durch die Schüttung vergleichsweise gering. Vorteilhaft wird daher der Dampfweg durch die Schüttung möglichst kurz ausgeführt, um den damit verbundenen Strömungswiderstand so gering wie möglich zu halten. Gemäß einer vorteilhaften Ausführung sind die Bohrungen derart zueinander beziehungsweise zu den Rohrleitungen des Wärmetauschers beabstandet, dass der maximale Dampfweg durch die Schüttung ca. 20 Millimeter beträgt. Einzelheiten zu der konstruktiven Gestaltung werden im Zusammenhang mit den beigefügten Figuren nachfolgend erläutert.

Die zweite vorteilhafte Ausführung des Aufnahmekörpers weist einen MetallSchwamm auf, in dessen Zwischenräume das Sorptionsmaterial eingebracht ist, und durch welchen die Rohrleitungen des Wärmetauschers geführt sind. Auch bei dieser Ausführungsform können vorteilhaft Dampfkanäle in den Aufnahmekörper insbesondere durch Einstanzen eingebracht sein. Dabei sind die Dampfkanäle wiederum vorteilhaft derart im Aufnahmekörper verteilt angeordnet, dass der maximale Dampfweg bei Einbringung des Sorptionsmaterials als Schüttung durch die Schüttung 20 Millimeter beträgt.

In einer besonders vorteilhaften Ausführung ist vorgesehen, den Wärmetauscher der Adsorber-Desorber-Einheit und/oder den Aufnahmekörper derselben mit dem Sorptionsmaterial zu beschichten. Dies kann alternativ oder zusätzlich zu der Einbringung des Feststoff-Sorptionsmateriales in die Adsorber-Desorber-Einheit erfolgen.

Um eine besonders gute Isolierung der Feststoff-Sorptionswärmepumpe gegenüber der Umgebung zu erreichen, kann das gemeinsame Gehäuse zweischalig ausgeführt sein. In den Innenraum zwischen die innere und die äußere Schale ist vorteilhaft ein wärmedämmendes Material eingefügt, welches Druckkräfte übertragen kann. Dadurch ist es möglich, beide Schalten besonders dünnwandig auszuführen, beispielsweise als dünne Blechummantelung. Druckkräfte können von der äußeren Schale über das wärmedämmende Material auf die innere Schale und weiter auf den Aufnahmekörper der Adsorber-Desorber-Einheit beziehungsweise der Kondensator-Verdampfer-Einheit abgeleitet werden. Der Zwischenraum zwischen den beiden Schalen kann evakuiert, das heißt mit einem Unterdruck beaufschlagt sein, um die Isolationswirkung noch zu steigern.

Bei einer zweiten erfindungsgemäßen Feststoff-Sorptionswärmepumpe sind die Adsorber-Desorber-Einheit und die Kondensator-Verdampfereinheit in getrennten Gehäusen angeordnet. Die Innenräume beider Gehäuse sind durch mindestens eine dampfleitende Verbindung miteinander verbunden, beispielsweise durch eine oder mehrere Rohrleitungen. Somit ist sowohl die Adsorber-Desorber-Einheit als auch die Kondensator-Verdampfer-Einheit als selbständiges Bauteil ausgeführt. Jedes dieser beiden Bauteile weist einen Aufnahmekörper auf, der vorteilhaft zwei Funktionen erfüllt, nämlich einerseits die Wärmeübertragung zwischen Wärmetauscher und Sorptionsmaterial (Adsorber-Desorber-Einheit) beziehungsweise die Funktion von Rippen des Wärmetauschers des Kondensators (Kondensator-Verdampfer-Einheit) und andererseits die Herstellung einer stabilen Struktur der einzelnen Baueinheiten. Aufgrund dieser stabilen Strukturen ist es nämlich wiederum möglich, die Wandungen der Gehäuse besonders dünn auszuführen, beispielsweise als Blechummantelung, da die notwendige Stabilität der einzelnen Baueinheiten durch die Aufnahmekörper hergestellt wird. Die Wandungen dienen lediglich zur Abdichtung der Innenräume gegenüber der Umgebung. Auch hier können wiederum Wandstärken von 1,5 Millimeter beziehungsweise 0,5 Millimeter oder weniger, insbesondere von 0,1 bis 0,5 Millimeter vorgesehen sein. Bis auf die getrennte Gehäuseausführung kann die zweite erfindungsgemäße Ausführung entsprechend der ersten ausgeführt sein.

Das erfindungsgemäße Heizungssystem umfasst einen Heizkreislauf, der von einem Wärmeträger durchströmt wird und an den eine Hochtemperaturquelle angeschlossen ist, von der Wärme auf den Wärmeträger bei einem vorgegebenen ersten Temperaturniveau überführt werden kann. Zudem ist eine Niedertemperaturquelle an den Heizkreislauf angeschlossen, zum Zuführen von Wärme auf den Wärmeträger auf einem zweiten Temperaturniveau, welches unterhalb des ersten Temperaturniveaus liegt. Eine Heizeinrichtung, die zum Abführen von Wärme aus dem Wärmeträger dient - beispielsweise für die Aufheizung eines Raumes oder Gebäudes - ist an den Heizkreislauf angeschlossen, wobei die Wärme auf einem vorgegebenen dritten Temperaturniveau abgeführt wird, welches zwischen dem ersten und dem zweiten Temperaturniveau liegt. An den Heizkreislauf ist weiterhin eine Feststoff-Sorptionswärmepumpe angeschlossen, welche den beschriebenen erfindungsgemäßen Aufbau aufweist. Mittels eines Heizkreisverteilers beziehungsweise mittels Heizkreislaufventilen, die im Heizkreislauf angeordnet sind, kann der Strömungsweg des Wärmeträgers durch den Heizkreislauf beziehungsweise durch die angeschlossenen Elemente eingestellt werden. Dabei ist der Heizkreisverteiler beziehungsweise sind die Heizkreislaufventile derart ausgeführt und angeordnet, dass vorteilhaft drei Schaltphasen eingestellt werden können. Die einzelnen Schaltphasen - Desorptionsphase, Adsorptionsphase und Bypassphase - werden nachfolgend in diesem Dokument beschrieben.

Die Erfindung soll anhand einiger Ausführungsbeispiele näher erläutert werden.

Es zeigen:
- Figur 1: eine schematische Darstellung eines Ausführungsbeispieles einer Feststoff-Sorptionswärmepumpe gemäß der vorliegenden Erfindung;
- Figur 2: eine schematische Darstellung eines Heizkreislaufes mit einer Feststoff-Sorptionswärmepumpe gemäß eines Ausführungsbeispieles der vorliegenden Erfindung;
- Figur 3: ein erstes Ausführungsbeispiel einer Feststoff-Sorptionswärmepumpe mit einem Aufnahmekörper;
- Figur 4: ein zweites Ausführungsbeispiel einer Feststoff-Sorptionswärmepumpe mit einem Aufnahmekörper;
- Figur 5: eine schematische Darstellung der Wärmeströmungen in den verschiedenen Phasen eines Ausführungsbeispieles eines Heizungssystemes;
- Figur 6: ein gemeinsames Gehäuse für eine Feststoff-Sorptionswärmepumpe gemäß der vorliegenden Erfindung mit einer besonders guten Wärmedämmung;
- Figur 7: eine erfindungsgemäße Ausführung mit einer Adsorber-Desorber-Einheit und einer Kondensator-Verdampfer-Einheit in getrennten Gehäusen.

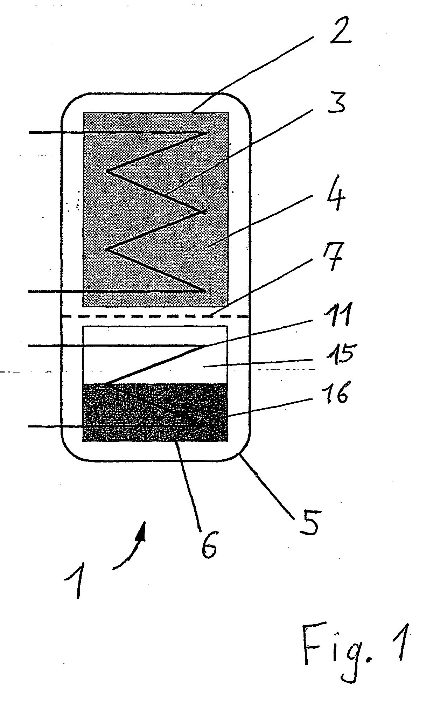

In Figur 1 erkennt man die Grundkomponenten eines Ausführungsbeispieles einer Feststoff-Sorptionswärmepumpe 1 gemäß der vorliegenden Erfindung. In einem gemeinsamen Gehäuse 5 sind eine Adsorber-Desorber-Einheit 2 und eine Kondensator-Verdampfer-Einheit 6 benachbart zueinander angeordnet. Die Adsorber-Desorber-Einheit 2 ist oberhalb der Kondensator-Verdampfer-Einheit 6 angeordnet, und beide Einheiten 5, 6 sind ausschließlich durch ein adsorptivdurchlässiges Element 7 voneinander getrennt. Durch die Adsorber-Desorber-Einheit 2 ist ein Wärmetauscher 3 geführt. Die Kondensator-Verdampfer-Einheit 6 umfasst ebenfalls einen Wärmetauscher, welcher auch als Kondensations-Verdampfungs-Rohr 11 bezeichnet werden kann.

Der Innenraum der Kondensator-Verdampfer-Einheit 6 wird durch bei der Kondensation des Arbeitsstoffes (Adsorptiv) anfallenden Kondensats in einen Dampfraum 15 und einen Kondensatraum 16 aufgeteilt. Das Volumen der Kondensator-Verdampfer-Einheit 6 ist derart bemessen, dass der Kondensations-Verdampfungs-Wärmetauscher bei maximalem Kondensatanfall nicht überflutet wird. Im Verhältnis zur Adsorber-Desorber-Einheit 2 hängt das maximal benötigte Kondensatvolumen von der erreichbaren Beladungsbreite der Wärmepumpe ab und beträgt typischerweise 15 bis 25 Prozent des Volumens des Sorptionsmateriales.

Das adsorptivdurchlässige Element 7 ist in Form eines schlecht wärmeleitenden Abstandshalters mit Dampfkanälen ausgeführt. Dadurch kann ein vorgegebener Abstand zwischen den beiden Einheiten 2, 6 eingestellt werden und diese weitgehend thermisch gegeneinander isoliert werden.

Nachfolgend soll kurz die Funktionsweise der dargestellten Feststoff-Sorptionswärmepumpe beschrieben werden: In einer ersten Phase wird über den Wärmetauscher 3 Heizwärme - beispielsweise aus einem Brenner einer Heizungsanlage - der Adsorber-Desorber-Einheit 2 zugeführt. Durch die Wärmezufuhr wird bei der Verwendung beispielsweise eines Silikagel/Wasser-Arbeitspaares Wasserdampf bei Unterdruck aus dem Sorptionsmaterial ausgetrieben. Der dampfförmige Arbeitsstoff (Adsorptiv, beispielsweise Wasserdampf) wird in der Kondensator-Verdampfer-Einheit 6 kondensiert und die dabei entstehende Kondensationswärme über das Kondensations-Verdampfungs-Rohr 11 abgeleitet und zu Heizzwecken genutzt. Aufgrund des bei der Kondensation anfallenden geringeren Druckes wird das aus dem Sorptionsmaterial ausgetriebene Adsorptiv sozusagen in die Kondensator-Verdampfer-Einheit 6 aus der Adsorber-Desorber-Einheit 2 durch das adsorptivdurchlässige Element 7 angesaugt.

Nach einer vorgegebenen Zeitspanne (beispielsweise von 30 Minuten) ist der erste Zyklus - Desorptionszyklus - beendet. Zu diesem Zeitpunkt ist idealerweise das Adsorbat vollständig aus dem Sorptionsmaterial ausgetrieben und liegt in kondensierter Form, das heißt in flüssiger Phase, in der Kondensator-Verdampfer-Einheit 6 an. Wie in Figur 1 dargestellt, wird sich ein gewisser Flüssigkeitsspiegel in der Kondensator-Verdampfer-Einheit 6 einstellen.

Der Betrieb der dargestellten Feststoff-Sorptionswärmepume wird jetzt in die zweite Phase - Adsorptionsphase - durch Umschalten der entsprechenden Leitungsführung im Wärmeträgerkreislauf überführt. Dabei wird die Adsorber-Desorber-Einheit 2, das heißt der Wärmetauscher 3 derselben, mit einer Heizeinrichtung, beispielsweise zum Aufheizen eines Raumes oder Gebäudes, verbunden. Das Kondensations-Verdampfungs-Rohr 11 der Kondensator-Verdampfer-Einheit 6 wird mit einer Niedertemperaturquelle verbunden. Die Adsorber-Desorber-Einheit 2 wird durch Wärmeabgabe abgekühlt. Dabei wird der Arbeitsstoff wieder vom Sorptionsmaterial adsorbiert, nachdem es zuvor in der Kondensator-Verdampfer-Einheit 6 verdampft wurde. Auch dieser zweite Zyklus kann beispielsweise eine halbe Stunde betragen, ist aber insbesondere etwas länger als die Desoptionsphase. Danach befindet sich die Feststoff-Sorptionswärmepumpe wieder in der Ausgangssituation für die erste Phase, das heißt, das Adsorbat ist idealerweise vollständig im Sorptionsmaterial adsorbiert. Adsorptionsphase und Desorptionsphase laufen somit zyklisch ab.

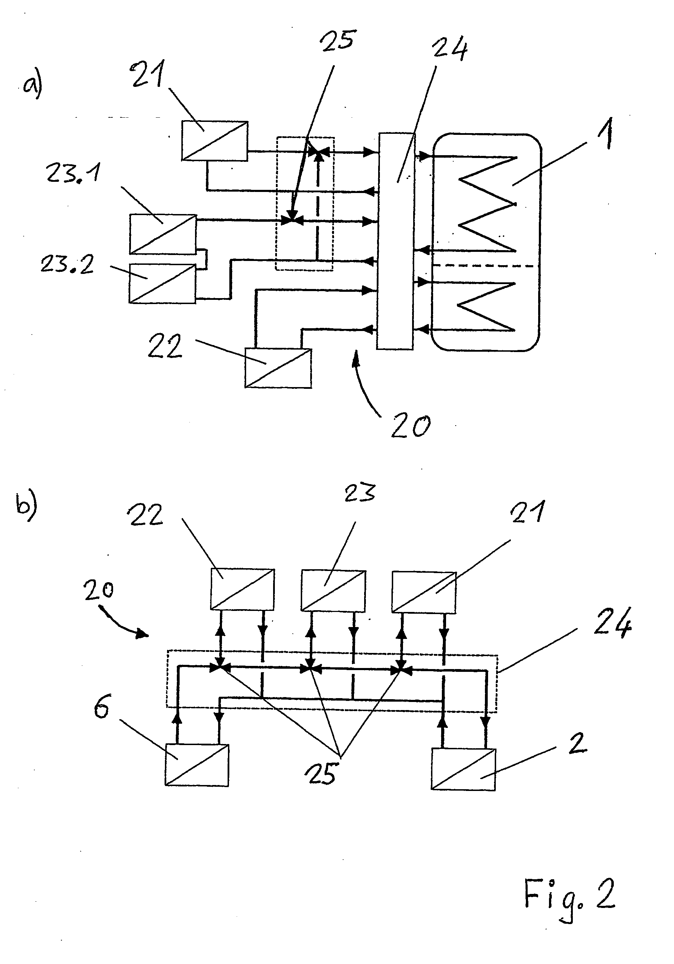

In Figur 2 ist die Systemeinbindung einer Ausführung einer erfindungsgemäßen Feststoff-Sorptionswärmepumpe in ein Heizungssystem gezeigt. Das Heizungssystem umfasst, wie in Figur 2a dargestellt ist, einen Heizkreislauf 20, an den eine Feststoff-Sorptionswärmepumpe 1, eine Hochtemperaturquelle 21 in Form eines Brenners mit einem angeschlossenen Wärmeübertrager, eine Niedertemperaturquelle 22 und eine Heizeinrichtung 23 mit einem Abgaswärmeübertrager 23.1 und einer Heizung 23.2 angeschlossen sind. In den Heizkreislauf 20 sind ein Heizkreisverteiler 24 und Heizkreislaufventile 25 in einer Bypassschaltung angeordnet. Damit können drei verschiedene Betriebsphasen eingestellt werden, welche nachfolgend beschrieben werden.

Als Brenner können beliebige konventionelle-Brenner, beispielsweise mit Gas, Öl oder anderen Brennstoffen, eingesetzt werden. Als Niedertemperaturquelle sind insbesondere Außenluftwärmetauscher, Erdkollektoren oder Grundwasser geeignet. Durch die Bypassschaltung ist ein bivalenter Betrieb von Brenner und Wärmepumpe möglich (Phase 3 - Bypass).

Durch die gezeigte Systemeinbindung ist es möglich, die Wärmepumpe mit einem öl- oder gasbetriebenen Brenner in einer Weise zu kombinieren, dass sowohl die Brennwertnutzung durch Kondensation der Abgase als auch die Nutzung der Wärmepumpe kombiniert werden können. Hierzu sind zwei getrennte Wärmeüberträger für die Wärmeauskopplung aus der Brennkammer und die Kondensation der Abgase vorgesehen. Auf den Abgaswärmeüberträger 23.1 kann auch verzichtet werden, wenn eine Nutzung der Wärmeenergie der Abgase entbehrlich ist.

In Figur 2b ist der Heizkreisverteiler 24 und dessen Verschaltungsmöglichkeiten nochmals in größerem Detail dargestellt. Schematisch ist die Anordnung der verschiedenen Elemente - Hochtemperaturquelle 21, Niedertemperaturquelle 22, Heizeinrichtung 23, Adsorber-Desorber-Einheit 2 und Kondensator-Verdampfer-Einheit 6 - dargestellt und deren Verschaltung im Heizkreislauf 20 mittels des Heizkreisverteilers 24. Der Heizkreisverteiler 24 umfasst drei Heizkreislaufventile 25, die insbesondere als Motor-3-Wege-Ventile ausgebildet sind.

Der gezeigte Verteiler 24 ist derart ausgebildet, dass folgende Verschaltungsmöglichkeiten (Phasen) eingestellt werden können:

| | |
|---|---|
| Phase 1 - | Desorption: Die Hochtemperaturquelle 21 ist mittels eines Strömungskreislaufes von einem Wärmeträger mit der Adsorber-Desorber-Einheit 2 verbunden; die Kondensator- Verdampfer-Einheit 6 ist mittels eines Strömungskreislaufes von einem Wärmeüberträger mit der Heizeinrichtung 23 verbunden; die Niedertemperaturquelle 22 ist gegenüber dem restlichen Heizkreislauf abgesperrt. |
| | |
| Phase 2 - | Adsorption: Die Hochtemperaturquelle 21 ist gegenüber dem restlichen Heizkreislauf abgesperrt; die Heizeinrichtung 23 ist mittels eines Strömungskreislaufes von einem Wärmeträger mit der Adsorber-Desorber-Einheit 2 verbunden; die Kondensator-Verdampfer-Einheit 6 ist mittels eines Strömungskreislaufes von einem Wärmeträger mit der Niedertemperaturquelle 22 verbunden. |
| | |
| Phase 3 - | Bypass: Die Niedertemperaturquelle 22, die Adsorber- Desorber-Einheit 2 und die Kondensator-Verdampfer-Einheit 6 sind gegenüber dem restlichen Heizkreislauf abgesperrt; die Hochtemperaturquelle 21 ist mit einem Strömungskreislauf von einem Wärmeträger mit der Heizeinrichtung 23 verbunden. |

Die Schaltstellungen der einzelnen Heizkreislaufventile 25 für die Phasen 1 und 2 sind aneinandergekoppelt. Anstelle der in Figur 2b dargestellten getrennten Ventile ist es auch möglich, im Heizkreisverteiler einen Ventilblock vorzusehen.

Die Zyklendauer (Phasendauer) der Sorptionswärmepumpe wird an die Wärmeabgabe der Heizeinrichtung angepasst. Die Phasen 1 und 2 (Desorption und Adsorption) werden alternierend jeweils so lange durchgeführt, bis die Vorlauftemperatur den aus der Heizkurve bestimmten Sollwert des Heiznetzes unterschreitet. Dadurch kann trotz diskontinuierlichen Betriebes der Wärmepumpe eine gleichmäßige Wärmeabgabe geleistet werden. Die Phase 3 (Bypass) wird eingestellt, wenn aufgrund der Betriebsbedingungen das Wärmeverhältnis der Wärmepumpe den Wert Eins erreicht. In diesem Fall wird die Hochtemperaturquelle 21, beispielsweise ein Brenner, direkt an das Heiznetz, das heißt die Heizeinrichtung 23 gekoppelt.

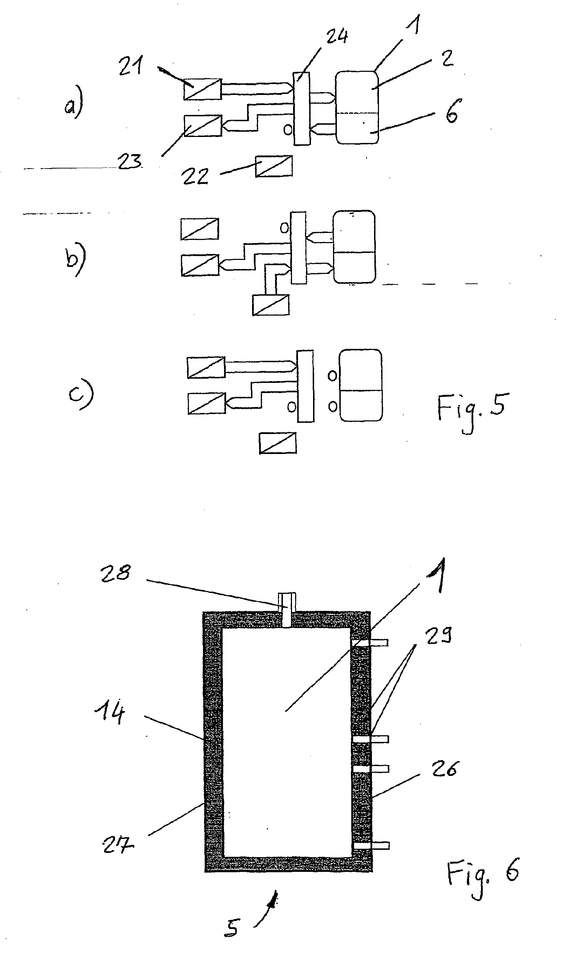

Die Wärmeströme in den einzelnen Phasen 1 bis 3 sind noch einmal in der Figur 5 dargestellt. Figur 5a zeigt die Phase 1 (Desorptionsphase). Von der Hochtemperaturquelle 21 fließt ein Wärmestrom in die Adsorber-Desorber-Einheit 2 der Feststoff-Sorptionswärmepumpe 1. Hier wird durch Erwärmung des Sorptionsmaterials das Adsorbat gelöst und strömt dampfförmig zur Kondensator-Verdampfer-Einheit 6, wo es kondensiert wird. Die Kondensationswärme wird von der Kondensator-Verdampfer-Einheit 6 in einem Wärmestrom zur Heizeinrichtung 23 geleitet. Die Niedertemperaturquelle 22 ist gegenüber dem Heizkreislauf isoliert.

In Figur 5b sind die Wärmeströme in der Phase 2 (Desorptionsphase) dargestellt. Die Hochtemperaturquelle 21 ist gegenüber dem restlichen System, das heißt dem Heizkreislauf isoliert. Die Niedertemperaturquelle 22 ist mittels des Heizkreisverteilers 24 derart an die Kondensator-Verdampfer-Einheit 6 der Feststoff-Sorptionswärmepumpe 1 angeschlossen, dass ein Wärmestrom von der Niedertemperaturquelle 22 zur Kondensator-Verdampfer-Einheit 6 fließt. Der flüssige Arbeitsstoff wird in der Kondensator-Verdampfer-Einheit 6 verdampft und strömt dampfförmig zur Adsorber-Desorber-Einheit 2, wo es sich am Sorptionsmaterial anlagert. Die Wärme der in Phase 1 aufgeheizten Adsorber-Desorber-Einheit 2 wird in einem Wärmestrom zur Heizeinrichtung 23 befördert. Somit können Wärmeverhältnisse von über 100 Prozent erreicht werden, das heißt idealerweise werden 100 Prozent der Heizenergie der Hochtemperaturquelle 21 in Phase 1 auf die Heizeinrichtung 23 übertragen und weitere 80 Prozent in Phase 2 durch den Wärmestrom aus der Niedertemperaturquelle 22 und die Adsorption in der Feststoff-Sorptionswärmepumpe 1.

In Figur 5c ist die Phase 3 (Bypassphase) dargestellt. Wie man sieht, ist mittels des Heizkreisverteilers 24 die Hochtemperaturquelle 21 direkt mit der Heizeinrichtung 23 verschaltet, so dass der Wärmestrom von der Hochtemperaturquelle 21 unmittelbar zur Heizeinrichtung 23 fließt. Die Feststoff-Sorptionswärmepumpe 1, das heißt Adsorber-Desorber-Einheit 2 und Kondensator-Verdampfer-Einheit 6 sowie die Niedertemperaturquelle 22 sind vom restlichen System isoliert.

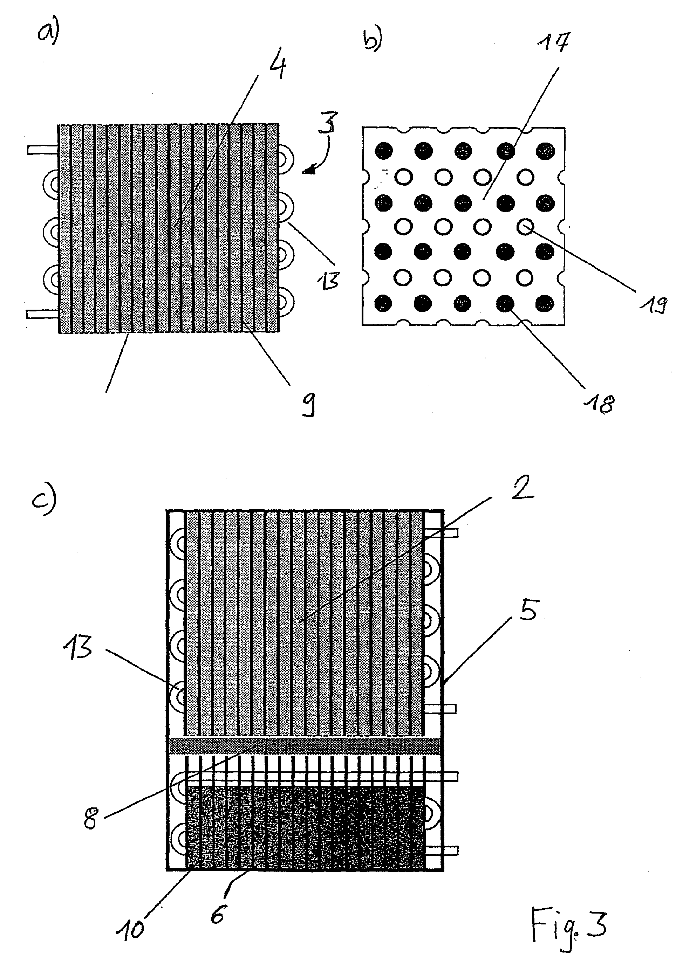

In Figur 3 ist eine erste vorzugsweise Ausführung der erfindungsgemäßen Feststoff-Sorptionswärmepumpe dargestellt. Figur 3a zeigt eine Adsorber-Desorber-Einheit mit einem Aufnahmekörper 9 in einer Lamellenform. Man kann die Adsorber-Desorber-Einheit auch als Lamellen-Adsorber bezeichnen. In Figur 3a ist eine Seitenansicht des Lamellen-Adsorbers dargestellt und in Figur 3b eine Aufsicht auf ein einzelnes Lamellenblatt. Beispielsweise kann ein handelsüblicher Lamellenwärmetauscher verwendet werden, der, wie in den Figuren 5a und 5b dargestellt ist, entsprechend angepasst wird.

Zwischen die Lamellen des Aufnahmekörpers 9 ist das Feststoff-Sorptionsmaterial 4 eingebracht, derart, dass ein möglichst guter Wärmeübergang vom Wärmetauscher über die Lamellen auf das Feststoff-Sorptionsmaterial 4 stattfindet. Der Wärmetauscher umfasst horizontale Rohrabschnitte, welche über Umlenkungen 13 miteinander verbunden sind, so dass der im Wärmetauscher geführte Wärmeträger von einem horizontalen Abschnitt über eine Umlenkung 13 in den nächsten, beispielsweise darunterliegenden, horizontalen Abschnitt geführt wird. Die Umlenkungen 13 ragen seitlich aus dem Aufnahmekörper 9 heraus.

Die Lamellen des Aufnahmekörpers 9 sind senkrecht ausgerichtet, um eine leichte Entlüftung der dadurch meist waagerecht angeordneten Rohrschleifen zu ermöglichen. Die einzelnen Lamellen umfassen Öffnungen für den Dampftransport, die nicht mit Rohren ausgefüllt sind. In die Öffnungen können perforierte Rohre, Bleche oder Drahtnetze eingebracht werden, um Dampfkanäle auszubilden. In Figur 3b ist ein einzelnes Lamellenblatt 17 mit darin eingebrachten Wärmeträgerrohren 18 und Dampfkanälen 19 dargestellt. Das Wärmeträgerrohr 18 ist beispielsweise der genannte horizontale Rohrabschnitt des Wärmetauschers 3, und kann beispielsweise mit Wasser als Wärmeträger durchströmt werden.

Der Aufnahmekörper 9 wird mit dem Sorptionsmaterial befüllt. Um zu verhindern, dass das Material herausrieselt, kann ein Drahtnetz oder ein perforiertes Blech umspannt werden. Alternativ oder zusätzlich können die Lamellen, die beispielsweise aus Kupfer- oder Aluminiumblech hergestellt sind, mit dem Sorptionsmaterial beschichtet werden.

Die in der Figur 3b gezeigten Dampfkanäle 19, welche durch die nicht mit Rohren ausgefüllten Öffnungen in den einzelnen Lamellen ausgebildet sind, arbeiten als Verteiler (Adsorption) beziehungsweise als Sammler (Desorption) des Dampfes. In der Adsorptionsphase strömt der Dampf von außen waagerecht in die Dampfkanäle 19 hinein und verteilt sich ausgehend von den Dampfkanälen 19 im Sorptionsmaterial 4, welches als Schüttung zwischen den Lamellen eingebracht ist. Dabei ist der Strömungswiderstand des Dampfes in den Dampfkanälen 19 im Vergleich zu dem Strömungswiderstand der Dampfströmung durch die Schüttung äußerst gering. Um den Gesamtströmungswiderstand gering zu halten, ist es daher vorteilhaft, den maximalen Dampfweg durch die Schüttung auf maximal 20 Millimeter zu begrenzen. Dies kann durch eine vorgegebene Verteilung der Bohrungen in den Lamellen erreicht werden.

Der maximale Dampfweg durch die Schüttung ergibt sich durch die Strecke, welche der Dampf ausgehend von einer Bohrung in einer Lamelle beziehungsweise von einem Dampfkanal 19 radial nach außen zurücklegt. Um diese Strecke auf ca. 20 Millimeter zu begrenzen, beträgt gemäß einer vorteilhaften Ausführung der Abstand zwischen einem Dampfkanal 19 und den benachbarten Rohren 25 Millimeter oder weniger. Vorteilhaft werden handelsübliche Lamellen in einer solchen Weise verschaltet, dass nur jede zweite Lochreihe mit einem Rohr ausgefüllt ist und die freien Lochreihen mit einem eingefügten zylindrischen Drahtnetz (alternativ auch mit perforierten Rohren oder Blechen) versehen sind, um die Dampfkanäle 19 auszubilden. Das eingefügte zylindrische Drahtnetz besteht vorteilhaft aus demselben Material wie die Lamelle, um Kontaktkorrosion zu vermeiden. Durch das eingefügte zylindrische Drahtnetz werden die Dampfkanäle 19 frei von der Schüttung des Sorptionsmaterial 4 gehalten, um so den Strömungswiderstand des Dampfes in den Dampfkanälen 19 gering zu halten.

In der Desorptionsphase sammeln die entsprechend ausgestalteten Dampfkanäle 19 das aus dem Sorptionsmaterial gelöste Adsorptiv, welches wiederum maximale die Strecke, welche einem Radius des Einzugsbereichs um einen einzelnen Dampfkanal entspricht, durch die Schüttung zurücklegt.

In Figur 3c ist die vollständige Feststoff-Sorptionswärmepumpe 1 mit einem Aufnahmekörper 9 gemäß der Figuren 3a und 3b dargestellt. Wie man sieht, umfasst auch die Kondensator-Verdampfer-Einheit 6 einen entsprechend ausgebildeten Aufnahmekörper 10. Man könnte die Kondensator-Verdampfer-Einheit auch als Lamellenverdampfer/-kondensator bezeichnen.

Die Adsorber-Desorber-Einheit 2 und die Kondensator-Verdampfer-Einheit 6 sind in einem gemeinsamen Gehäuse 5 angeordnet und durch einen Keramikschwamm 8 voneinander getrennt. Das gemeinsame Gehäuse 5 besteht aus einem dünnen Blech, welches beide Elemente umhüllt. Die mechanische Stabilität des Bleches wird durch die Unterstützung der Ränder des Wärmetauschers 3 im Bereich der Rohrumlenkungen 13 gesichert.

Der Abstand zwischen Adsorber-Desorber-Einheit und Kondensator-Verdampfer-Einheit wird durch den Keramikschwamm 8 hergestellt, welcher eine geringe Wärmeleitfähigkeit aufweist, jedoch eine ausreichende Dampfdurchlässigkeit und Stabilität. Der Dampftransport, das heißt die Strömung des Adsorptivs, zwischen Adsorber-Desorber-Einheit 2 und Kondensator-Verdampfer-Einheit 6 verläuft im Bereich der Rohrumlenkungen 13 der Lamellenwärmeüberträger. Die Blechverkleidung ist vakuumdicht gegenüber der Umgebung ausgeführt.

Durch die in Figur 3 gezeigte Ausführung ist es möglich, die gesamte Feststoff-Sorptionswärmepumpe mit einer geringen Wärmekapazität auszuführen, aufgrund des einfachen Aufbaues mit wenigen Rohrleitungen und-geringer Wandstärke, und dadurch ein besonders hohes Wärmeverhältnis zu erreichen.

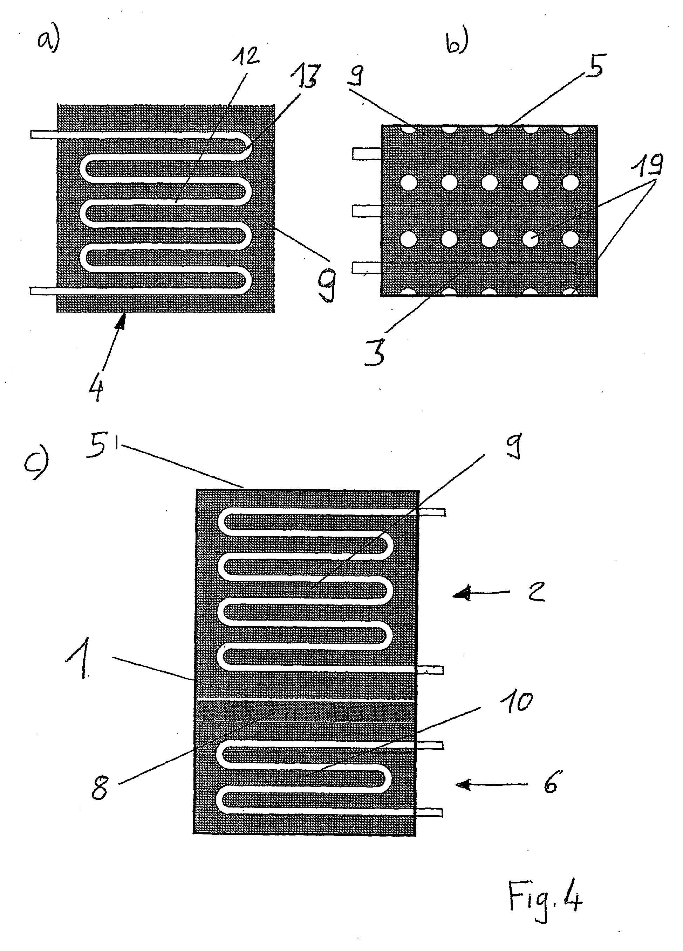

Figur 4 zeigt ein zweites Ausführungsbeispiel einer Feststoff-Sorptionswärmepumpe mit einem Aufnahmekörper. Der in den Figuren 4a und Figur 4b dargestellte Aufnahmekörper 9 der Adsorber-Desorber-Einheit 2 ist als Metallschwamm ausgebildet. Der Metallschwamm dient der Wärmeübertragung zwischen dem in dem Wärmetauscher 3 geführten Wärmeträger und dem Sorptionsmaterial. Der Metallschwamm ist offenporig ausgeführt und mit Sorptionsmaterial befüllt oder beschichtet. Der Metallschwamm kann mit einem Drahtnetz oder einem perforierten Blech umspannt werden, um zu verhindern, dass das Sorptionsmaterial herausrieselt.

Die Rohrleitungen des Wärmetauschers 3 sind in den Metallschwamm eingebracht. Die Verbindung zwischen dem Metallschwamm und der Rohrleitung ist gut wärmeleitend, dies kann insbesondere durch Eingießen oder Einlöten des Rohres erreicht werden.

Wie in Figur 4b dargestellt ist, können in den Metallschwamm zusätzliche Dampfkanäle 19 eingestanzt werden.

Der Wärmetauscher 3 kann wiederum aus horizontalen Rohrabschnitten 12 aufgebaut sein, die durch Umlenkungen 13 miteinander verbunden sind. Wie in der Draufsicht in Figur 4b dargestellt ist, ist in diesem Ausführungsbeispiel ein Wärmetauscher, umfassend drei vertikal nebeneinander angeordnete Rohrschleifen, in den Metallschwamm eingebracht. Der Metallschwamm kann dabei vorzugsweise aus drei quaderförmigen Abschnitten hergestellt sein, mit jeweils einem eingebrachten Rohrabschnitt, die bündig zueinander in dem gemeinsamen Gehäuse 5 angeordnet sind. Dadurch ist es besonders leicht möglich, die Dampfkanäle 19 in den Aufnahmekörper 9, das heißt den Metallschwamm, einzubringen. Selbstverständlich ist es auch möglich, den Metallschwamm derart zu segmentieren, dass die Rohre des Wärmetauschers 3 zwischen zwei benachbarte Segmente eingelegt werden können.

Die Dampfkanäle können mit perforierten Rohren, Blechen oder Drahtnetzen versehen werden, um ein Herausrieseln des Feststoff-Sorptionsmateriales 4 zu verhindern.

In Figur 4c ist eine komplette Feststoff-Sorpitonswärmepumpe 1 mit einer Adsorber-Desorber-Einheit 2, umfassend einen Aufnahmekörper 9, der als Metallschwamm ausgebildet ist, und einer Kondensator-Verdampfer-Einheit 6 mit einem Aufnahmekörper 10, der ebenfalls entsprechend als Metallschwamm ausgeführt ist, in einem gemeinsamen Gehäuse 5 dargestellt. Die beiden Einheiten 2, 6 sind übereinander benachbart angeordnet und ausschließlich durch einen Keramikschwamm 8 voneinander getrennt. Das gemeinsame Gehäuse 5 besteht aus einem dünnen Blech, vorzugsweise mit einer Wandstärke von 0,1 bis 0,5 mm, das auf die Ränder der Aufnahmekörper 9 und 10 und den zwischengeschalteten Keramikschwamm 8 aufgelegt ist. Die mechanische Stabilität des Bleches wird dabei durch das Auflegen auf die Metallschwämme beziehungsweise den Keramikschwamm hergestellt, so dass das Blech selber statisch instabil ausgeführt sein kann. Dadurch sind besonders geringe Wandstärken möglich, welche wiederum zu einer besonders geringen Wärmekapazität der gesamten Feststoff-Sorptionswärmepumpe führen.

Der Dampftransport zwischen der Adsorber-Desorber-Einheit 2 und der Kondensator-Verdampfer-Einheit 6 verläuft durch den Keramikschwamm und in den Dampfkanälen 19, welche in die Adsorber-Desorber-Einheit 2 eingebracht sind.

Wie dargestellt, ist die Kondensator-Verdampfer-Einheit 6 unterhalb der Adsorber-Desorber-Einheit 2 ausgeführt und weist mindestens eine Höhe auf, die so groß ist, wie der maximale Füllstand mit anfallendem Kondensat.

In Figur 6 ist eine vorzugsweise Ausführung des gemeinsamen Gehäuses 5 dargestellt. In den Innenraum wird die Feststoff-Sorptionswärmepumpe 1 geschaltet, die in dieser Ansicht selber nicht dargestellt ist. Das Gehäuse 5 ist zweischalig ausgeführt, umfassend eine innere Schale, die vorzugsweise aus einem dünnen Metallblech hergestellt ist, und eine äußere Schale, die vorzugsweise ebenfalls aus einem dünnen Metallblech hergestellt ist.

In den Zwischenraum zwischen die beiden Schalen, das heißt zwischen die innere Blechverkleidung 26 und die äußere Blechverkleidung 27, ist vorzugsweise eine Granulatschüttung 14 eingebracht, welche eine derartige mechanische Stabilität aufweist, dass sie Druckkräfte zwischen den beiden Blechverkleidungen 26, 27 überträgt. Dadurch ist es möglich, diese anfallenden Kräfte nach innen auf beispielsweise in den vorherigen Figuren dargestellten Aufnahmekörper beziehungsweise Wärmetauscherrohre zu übertragen. Somit können auch die Blechverkleidungen 26 und 27 in besonders geringer Wandstärke ausgeführt werden, um die Kapazität der Feststoff-Sorptionswärmepumpe gering zu halten.

An das dargestellte Gehäuse ist ein Evakuierungsstutzen 28 angeschlossen, der vorzugsweise zweigeteilt durch Ineinanderschalten eines inneren Rohres in ein äußeres Rohr ausgeführt ist. Selbstverständlich ist es auch möglich, getrennte Stutzen anzuordnen. Mittels des Evakuierungsstutzens 28 kann sowohl der Innenraum der Feststoff-Sorptionswärmepumpe 1 wie auch der Zwischenraum zwischen den beiden Schalen des Gehäuses 5 evakuiert werden. Die Evakuierung des Innenraumes der Feststoff-Sorptionswärmepumpe 1 dient dabei der Einstellung eines vorgegebenen Druckes entsprechend der Erfordernisse des verwendeten Arbeitspaares. Die Evakuierung des Zwischenraumes im Gehäuse 5 dient der optimalen Wärmedämmung.

Seitlich im Gehäuse 5 sind die Rohrdurchführungen 29 für die Wärmetauscher der Adsorber-Desorber-Einheit und der Kondensator-Verdampfer-Einheit dargestellt.

Als Dämmmaterial, das zwischen die beiden Schalen des Gehäuses 5 eingebracht wird, kann beispielsweise Silikagel, Perlit oder Schaumglasperlen verwendet werden.

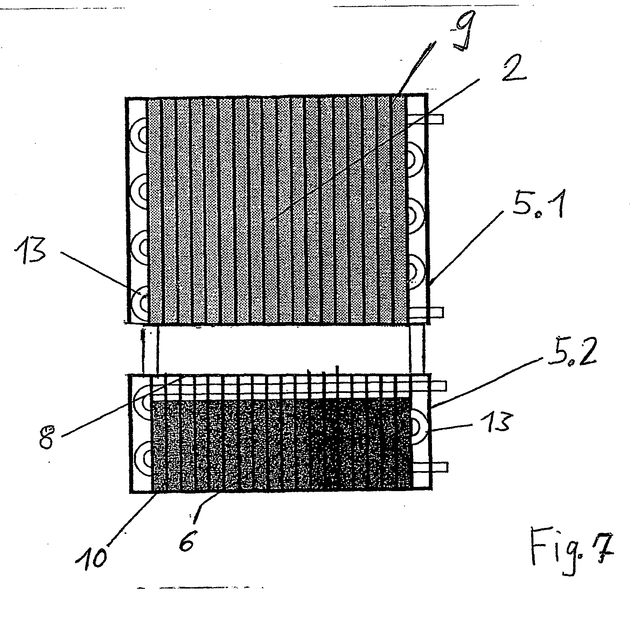

In der Figur 7 ist eine zweite Ausführung der vorliegenden Erfindung gezeigt. Bei dieser Ausführung sind die Adsorber-Desorber-Einheit 2 und die Kondensator-Verdampfer-Einheit 6 in getrennten Gehäusen 5.1 und 5.2 angeordnet. Die Innenräume beider Gehäuse 5.1 und 5.2 sind beispielsweise wie dargestellt, durch Rohrleitungen miteinander verbunden. Wie man sieht, ist jedes der Gehäuse 5.1 und 5.2 als-dünne Blechummantelung ausgeführt, welche auf die Aufnahmekörper 9 beziehungsweise 10 aufgelegt ist, mit Ausnahme der Bereiche, in welchen die Umlenkungen 13 vorgesehen sind, auf welche die Blechummantelungen dort aufgelegt sind. Selbstverständlich ist es möglich, die beiden Baueinheiten, das heißt die Adsorber-Desorber-Einheit 2 und die Kondensator-Verdampfer-Einheit 6 beliebig getrennt voneinander anzuordnen, sofern durch geeignete Verbindungsleitungen die Dampfströmung zwischen den beiden Baueinheiten sichergestellt wird.

Die in den Zeichnungen dargestellten Ausführungen der Erfindung weisen verschiedene Vorteile auf. So kann ein besonders einfacher, kompakter Aufbau erreicht werden. Durch die Verwendung einer Blechverkleidung als Vakuumbehälter kann eine besonders geringe spezifische Wärmekapazität erreicht werden und damit ein hohes Wärmeverhältnis auch ohne innere Wärmerückgewinnung. Der Einsatz einer vakuumsuperisolierten Wärmedämmung in einem doppelwandigen Behälter ist möglich. Zugleich ist eine leichte Anpassung des diskontinuierlichen Wärmepumpenbetriebs an den Heizbedarf durch eine variable Zyklendauer möglich. Dadurch werden externe Pufferspeicher, wie sie in herkömmlichen thermisch angetriebenen Wärmepumpen häufig eingesetzt werden, vermieden.

### Bezugszeichenliste

- 1: Feststoff-Sorptionspumpe
- 2: Adsorber-Desorber-Einheit
- 3: Wärmetauscher
- 4: Feststoff-Sorptionsmaterial
- 5: Gehäuse
- 6: Kondensator-Verdampfer-Einheit
- 7: adsorptivdurchlässiges Element
- 8: Keramikschwamm
- 9: Aufnahmekörper
- 10: Aufnahmekörper
- 11: Kondensations-Verdampfungs-Rohr
- 12: Rohrabschnitt
- 13: Umlenkung
- 14: Granulatschüttung
- 15: Dampfraum
- 16: Kondensatraum
- 17: Lamellenblatt
- 18: Wärmeträgerrohr
- 19: Dampfkanal
- 20: Heizkreislauf
- 21: Hochtemperaturquelle
- 22: Niedertemperaturquelle
- 23: Heizeinrichtung
- 23.1: Abgaswärmeüberträger
- 23.2: Heizung
- 24: Heizkreisverteiler
- 25: Heizkreislaufventil
- 26: innere Blechverkleidung
- 27: äußere Blechverkleidung
- 28: Evakuierungsstutzen
- 29: Rohrdurchführung

## Patentansprüche

1. Feststoff-Sorptionswärmepumpe (1), umfassend:
1.1 eine Adsorber-Desorber-Einheit (2), mit einem Wärmetauscher (3) und einem Feststoff-Sorptionsmaterial (4);
1.2 die Adsorber-Desorber-Einheit (2) ist in einem gemeinsamen, zur Umgebung abgedichteten Gehäuse (5) zusammen mit einer Kondensator-Verdampfer-Einheit (6) angeordnet, wobei die Adsorber-Desorber-Einheit (2) und die Kondensator-Verdampfer-Einheit (6) durch ein adsorptivdurchlässiges Element (7) voneinander getrennt sind; **gekennzeichnet durch** die folgenden Merkmale:
1.3 die Adsorber-Desorber-Einheit (2) umfaßt einen wärmeleitenden Aufnahmekörper (9), der in-wärmeleitender Verbindung mit dem Wärmetauscher (3) angeordnet ist;
1.4 der Aufnahmekörper (9) nimmt das Sorptionsmaterial (4) auf;
1.5 der Aufnahmekörper (9) verleiht der Adsorber-Desorber-Einheit (2) ihre Stabilität;
1.6 der Innenraum des gemeinsamen Gehäuses (5) ist mit einem Unterdruck beaufschlagt und das gemeinsame Gehäuse (5) ist als dünnwandige Blechummantelung ausgeführt, die derart auf den Aufnahmekörper (9) aufgelegt ist, dass die **durch** den Unterdruck erzeugten Kollabierungskräfte auf den Aufnahmekörper (9) und/oder den Wärmetauscher (3) und die Kondensator-Verdampfer-Einheit (6) abgeleitet werden.

2. Feststoff-Sorptionswärmepumpe gemäß Anspruch 1, **dadurch gekennzeichnet, dass** die Kondensator-Verdampfer-Einheit (6) im gemeinsamen Gehäuse (5) unterhalb der Adsorber-Desorber-Einheit (2) angeordnet ist.

3. Feststoff-Sorptionswärmepumpe gemäß einem der Ansprüche 1 oder 2, **dadurch gekennzeichnet, dass** das adsorptivdurchlässige Element (7) als ein dampfdurchlässiger Schwamm, insbesondere Keramik-Schwamm (8), ausgebildet ist, der einen vorgegebenen Abstand zwischen der Adsorber-Desorber-Einheit (2) und der Kondensator-Verdampfer-Einheit (6) herstellt.

4. Feststoff-Sorptionswärmepumpe gemäß einem der Ansprüche 1 bis 3, **dadurch gekennzeichnet, dass** die Kondensator-Verdampfer-Einheit (6) einen gleichartigen Aufnahmekörper (10) wie die Adsorber-Desorber-Einheit (2) umfasst, der derart aufgebaut ist, dass er von einem Wärmeträger durchströmte Kondensations-Verdampfungs-Rohre (11) zum Abführen von Kondensationswärme und Zuführen von Verdampfungswärme aufnimmt und die strukturelle Stabilität der Kondensator-Verdampfer-Einheit herstellt.

5. Feststoff-Sorptionswärmepumpe gemäß einem der Ansprüche 1 bis 4, **dadurch gekennzeichnet, dass** der Aufnahmekörper (9, 10) als Lamellenkonstruktion oder Metallschlamm ausgeführt ist.

6. Feststoff-Sorptionswärmepumpe gemäß einem der Ansprüche 4 oder 5, **dadurch gekennzeichnet, dass** das gemeinsame Gehäuse (5) derart auf die Aufnahmekörper (9, 10) und insbesondere auf Abschnitte des Wärmetauschers (3) und der Kondensations-Verdampfungs-Rohre (11) aufgelegt ist, dass die durch den Unterdruck erzeugten Kollabierungskräfte auf die Aufnahmekörper (9, 10) und/oder den Wärmetauscher (3) und die Kondensations-Verdampfungs-Rohre (11) abgeleitet werden.

7. Feststoff-Sorptionswärmepumpe gemäß einem der Ansprüche 4 bis 6, **dadurch gekennzeichnet, dass** der Wärmetauscher (3) und die Kondensations-Verdampfungs-Rohre (11) jeweils in Form von einer oder mehreren Rohrschleifen ausgebildet sind, wobei jede Rohrschleife eine Vielzahl von horizontal angeordneten Rohrabschnitten (12) umfasst, die an ihren horizontalen Enden durch Umlenkungen (13) wärmeträgerführend miteinander verbunden sind.

8. Feststoff-Sorptionswärmepumpe gemäß der Ansprüche 6 und 7, **dadurch gekennzeichnet, dass** die Blechummantelung von außen auf die Umlenkungen (13) aufgelegt ist.

9. Feststoff-Sorptionswärmepumpe gemäß einem der Ansprüche 1 bis 8, **dadurch gekennzeichnet, dass** der Tragkörper (9) und/oder der Wärmetauscher der Adsorber-Desorber-Einheit (2) mit dem Feststoff-Sorptionsmaterial (4) beschichtet ist/sind.

10. Feststoff-Sorptionswärmepumpe gemäß einem der Ansprüche 1 bis 9, **dadurch gekennzeichnet, dass** das gemeinsame Gehäuse (5) als zweischaliges Gehäuse ausgebildet ist, dessen Zwischenraum zwischen den Schalen mit einem druckkräfteübertragenden, wärmedämmenden Material, insbesondere einer Granulatschüttung (14) aufgefüllt ist, und dass der Zwischenraum zwischen den Schalen evakuiert ist.

11. Feststoff-Sorptionswärmepumpe (1), umfassend:
11.1 eine Adsorber-Desorber-Einheit (2), mit einem Wärmetauscher (3) und einem Feststoff-Sorptionsmaterial (4);
11.2 eine Kondensator-Verdampfer-Einheit (6); **dadurch gekennzeichnet, dass**
11.3 die Adsorber-Desorber-Einheit (2) einen wärmeleitenden Aufnahmekörper (9) umfasst, der in wärmeleitender Verbindung mit dem Wärmetauscher (3) angeordnet ist;
11.4 der Aufnahmekörper (9) nimmt das Sorptionsmaterial (4) auf;
11.5 der Aufnahmekörper (9) verleiht der Adsorber-Desorber-Einheit (2) ihre Stabilität;
11.6 die Kondensator-Verdampfer-Einheit (6) umfasst einen wärmeleitenden Aufnahmekörper (10), der derart aufgebaut ist, dass er von einem Wärmeträger durchströmte Kondensations-Verdampfungs-Rohre (11) zum Abführen von Kondensationswärme und Zuführen von Verdampfungswärme aufnimmt und der Kondensator-Verdampfer-Einheit (6) ihre Stabilität verleiht;
11.7 die Adsorber-Desorber-Einheit (2) ist in einem ersten, zur Umgebung abgedichteten Gehäuse (5.1) und die Kondensator-Verdampfer-Einheit (6) in einem zweiten, zur Umgebung abgedichteten Gehäuse (5.2) angeordnet, wobei die Innenräume der Gehäuse (5.1, 5.2) mit einem Unterdruck beaufschlagt sind und mittels mindestens einer dampfleitenden Verbindung miteinander verbunden sind;
11.8 die Gehäuse (5.1, 5.2) sind als dünnwandige Blechummantelungen ausgeführt, die derart auf die Aufnahmekörper (9, 10) aufgelegt sind, dass die durch den Unterdruck erzeugten Kollabierungskräfte auf die Aufnahmekörper (9, 10) und/oder den Wärmetauscher (3) und die Kondensations-Verdampfungs-Rohre (11) abgeleitet werden.

12. Feststoff-Sorptionswärmepumpe gemäß Anspruch 11, **dadurch gekennzeichnet, dass** die Aufnahmekörper (9, 10) als Lamellenkonstruktion oder Metallschwamm ausgeführt sind.

13. Feststoff-Sorptionswärmepumpe gemäß einem der Ansprüche 11 oder 12, **dadurch gekennzeichnet, dass** der Wärmetauscher (3) und die Kondensations-Verdampfungs-Rohre (11) jeweils in Form von einer oder mehreren Rohrschleifen ausgebildet sind, wobei jede Rohrschleife eine Vielzahl von horizontal angeordneten Rohrabschnitten (12) umfasst, die an ihren horizontalen Enden durch Umlenkungen (13) Wärmeträger führend miteinander verbunden sind.

14. Eeststoff-Sorptionswärmepumpe gemäß der Ansprüche 12 und 13, **dadurch gekennzeichnet, dass** die Blechummantelungen von außen auf die Umlenkungen (13) aufgelegt sind.

15. Feststoff-Sorptionswärmepumpe gemäß einem der Ansprüche 12 bis 14, **dadurch gekennzeichnet, dass** der Tragkörper (9) und/oder der Wärmetauscher der Adsorber-Desorber-Einheit (2) mit dem Feststoff-Sorptionsmaterial (4) beschichtet ist/sind.

16. Feststoff-Sorptionswärmepumpe gemäß einem der Ansprüche 12 bis 15, **dadurch gekennzeichnet, dass** die Gehäuse (5.1, 5.2) als zweischalige Gehäuse ausgebildet sind, deren Zwischenräume zwischen den Schalen mit einem druckkräfteübertragenden, wärmedämmenden Material, insbesondere einer Granulatschüttung (14) aufgefüllt sind, und dass die Zwischenräume zwischen den Schalen evakuiert sind.

17. Heizungssystem, umfassend:
17.1 einen Heizkreislauf (20), der von einem Wärmeträger durchströmt wird;
17.2 eine Hochtemperaturquelle (21), die an den Heizkreislauf (20) angeschlossen ist, zum Zuführen von Wärme in den Wärmeträger auf einem vorgegebenen ersten Temperaturniveau;
17.3 eine Niedertemperaturquelle (22), die an den Heizkreislauf (20) angeschlossen ist, zum Zuführen von Wärme in den Wärmeträger auf einem vorgegebenen zweiten Temperaturniveau, das unterhalb des ersten Temperaturniveaus liegt;
17.4 eine Heizeinrichtung (23), die an den Heizkreislauf (20) angeschlossen ist, zum Abführen von Wärme aus dem Wärmeträger auf einem vorgegebenen dritten Temperaturniveau, das zwischen dem ersten und dem zweiten Temperaturniveau liegt;
17.5 eine Feststoff-Sorptionswärmepumpe (1) gemäß einem der Ansprüche 1 bis 16, die an den Heizkreislauf (20) angeschlossen ist;
17.6 einen Heizkreisverteiler (24) und/oder Heizkreislaufventile (25), der/die an den Heizkreislauf (20) angeschlossen ist/sind, zum selektiven Einstellen der Strömung des Wärmeträgers durch den Heizkreislauf (20).

18. Heizungssystem gemäß Anspruch 17, **dadurch gekennzeichnet, dass** der Heizkreisverteiler (24) und/oder die Heizkreislaufventile (25) einstellbar für drei Schaltphasen ist/sind:
18.1 eine erste Schaltphase - Desorptionsphase - , in der ein erster Strömungskreislauf des Wärmeträgers zwischen der Hochtemperaturquelle (21) und der Adsorber-Desorber-Einheit (2) hergestellt ist und ein zweiter Strömungskreislauf des Wärmeträgers zwischen der Kondensator-Verdampfer-Einheit (6) und der Heizeinrichtung (23);
18.2 eine zweite Schaltphase - Adsorptionsphase -, in der ein erster Strömungskreislauf des Wärmeträgers zwischen der Heizeinrichtung (23) und der Adsorber-Desorber-Einheit (2) eingestellt ist und ein zweiter Strömungskreislauf des Wärmeträgers zwischen der Niedertemperaturquelle (22) und der Kondensator-Verdampfer-Einheit (6);
18.3 eine dritte Schaltphase - Bypassphase -, in der ein Strömungskreislauf des Wärmeträgers zwischen der Hochtemperaturquelle (21) und der Heizeinrichtung (23) eingestellt ist.

## Claims

1. A solid sorption heat pump (1), comprising:
1.1, an adsorber/desorber unit (2), comprising a heat exchanger and a solid sorption material (4);
1.2. the adsorber/desorber unit (2) is arranged In a common housing (5), which is sealed against the outside atmosphere, together with a condenser/evaporator unit (6), with the adsorber/desorber unit (2) and the condenser/evaporator unit (6) being separated from one another by an adsorbant-permeable element (7);
**characterized by** the following features:
1.3. the adsorber/desorber unit (2) comprises a thermoconductive receiving body (9) which is arranged in a thermoconductive connection with the heat exchanger (3);
1.4. the receiving body (9) receives the sorption material;
1.5. the receiving body (9) provides stability to the adsorber/desorber unit (2);
1.6. the interior space of the common housing (5) is subjected to the action of a negative pressure and the common housing (5) is provided as a thin-walled sheet metal sheathing that is placed on the receiving body (9) in such a way that the collapsing forces generated by the negative pressure are diverted onto the receiving body (9) and/or the heat exchanger (2) and the condenser/evaporator unit (6).

2. A solid sorption heat pump according to claim 1, **characterized in that** the condenser/evaporator unit (6)is arranged In the common housing (5) beneath the adsorber/desorber unit (2).

3. A solid sorption heat pump according to one of the claims 1 or 2,
**characterized in that** the adsorbant-permeable element (7) is arranged as a vapor-permeable sponge, especially a ceramic sponge (8), which produces a predetermined distance between the adsorber/desorber unit (2) and the condenser/evaporator unit (6).

4. A solid sorption heat pump according to one of the claims 1 to 3,
**characterized In that** the condenser/evaporator unit (6) comprises a similar receiving body (10) as the adsorber/desorber unit (2), which body is arranged in such a way that it receives condensation-evaporation pipes (11) which are flowed through by a heat-transfer medium for removing condensation heat and for supplying evaporation heat and produces the structural stability for the condenser/evaporator unit.

5. A solid sorption heat pump according to one of the claims 1 to 4,
**characterized in that** the receiving body (9, 10) is arranged as a laminar construction or metal sponge.

6. A solid sorption heat pump according to one of the claims 4 or 5,
**characterized in that** the common housing (5) is placed in such a way on the receiving bodies (9, 10) and especially on sections of the heat exchanger (3) and the condensation-evaporation pipes (11) that the collapsing forces produced by the negative pressure are diverted onto the receiving bodies (9, 10) and/or the heat exchanger (3) and the condensation-evaporation pipes (11).

7. A solid sorption heat pump according to one of the claims 4 to 6,
**characterized in that** the heat exchanger (3) and the condensation-evaporation pipes (11) are each arranged in the form of one or several pipe coils, with each pipe coil comprising a plurality of horizontally arranged pipe sections (12) which are connected at their horizontal ends by deflecting portions (13) in a manner guiding the heat-transfer medium.

8. A solid sorption heat pump according to one of the claims 6 and 7,
**characterized in that** the sheet metal sheathing is placed from the outside on the deflecting portions (13).

9. A solid sorption heat pump according to one of the claims 1 to 8,
**characterized in that** the support body (9) and/or the heat exchanger of the adsorber/desorber unit (2) is/are coated with the solid sorption material (4).

10. A solid sorption heat pump according to one of the claims 1 to 9,
**characterized in that** the common housing (5) is arranged as a double-shell housing whose cavity between the shells is filled up with a material which transmits pressure forces and is heat-insulating, especially a filling with granular material (14), and that the cavity between the shells is evacuated.

11. A solid sorption heat pump (1), comprising;
11.1. an adsorber/desorber unit (2), comprising a heat exchanger (3) and a solid sorption material (4);
11.2. a condenser/evaporator unit (6);
**characterized in that**
11.3. the adsorber/desorber unit (2) comprises a thermoconductive receiving body (9) which is arranged In a thermoconductive connection with the heat exchanger (3);
11.4. the receiving body (9) receives the sorption material (4);
11.5. the receiving body (9) provides stability to the adsorber/desorber unit (2);
11.6. the condenser/evaporator unit (6) comprises a thermoconductive receiving body (9) which is arranged in such a way that it receives condensation-evaporation pipes (11) which are flowed through by a heat-transfer medium for removing condensation heat and for supplying evaporation heat and produces the structural stability for the condenser/evaporator unit (6).
11.7. the adsorber/desorber unit (2) is arranged in a first housing (5.1) which is sealed against the outside atmosphere and the condenser/evaporator unit (6) in a second housing (5.2) which is sealed against the outside atmosphere, with the interior spaces of the housings (5.1, 5.2) being subjected to the action of a negative pressure and being connected with each other by means of at least one vapor-conducting connection;
11.8. the housings (5.1, 5.2) are provided as thin-walled sheet metal sheathings that are placed on the receiving bodies (9, 10) in such a way that the collapsing forces generated by the negative pressure are diverted onto the receiving bodies (9, 10) and/or the heat exchanger (3) and the condensation-evaporation pipes (11).

12. A solid sorption heat pump according to claim 11, **characterized in that** the receiving bodies (9, 10) are arranged as a lamellar construction or metal sponge.

13. A solid sorption heat pump according to one of the claims 11 or 12,
**characterized in that** the heat exchanger (3) and the condensation-evaporation pipes (11) are each arranged in the form of one or several pipe coils, with each pipe coil comprising a plurality of horizontally arranged pipe sections (12) which are connected at their horizontal ends by deflecting portions (13) in a manner guiding the heat-transfer medium.

14. A solid sorption heat pump according to the claims 12 and 13, **characterized in that** the sheet metal sheathings are placed from the outside on the deflecting portions (13).

15. A solid sorption heat pump according to one of the claims 12 to 14,
**characterized in that** the support body (9) and/or the heat exchanger of the adsorber/desorber unit (2) is/are coated with the solid sorption material (4).

16. A solid sorption heat pump according to one of the claims 12 to 15,
**characterized in that** the housings (5.1, 5.2) are arranged as double-shell housings whose cavities between the shells are filled up with a material which transmits pressure forces and is heat-insulating, especially a filling with granular material (14), and that the cavities between the shells are evacuated.

17. A heating system, comprising:
17.1. a heating circulation (20) which is flowed through by a heat-transfer medium;
17.2. a high-temperature source (21) which is connected to the heating circulation (20) for supplying heat to the heat-transfer medium to a predetermined first temperature level;
17.3. a low-temperature source (22) which is connected to the heating circulation (20) for supplying heat to the heat-transfer medium at a predetermined second temperature level which lies beneath the first temperature level;
17.4. a heating device (23) which is connected to the heating circulation (20) for removing heat from the heat-transfer medium to a predetermined third temperature level which lies between the first and second temperature level;
17.5. a solid sorption heat pump (1) according to one of the claims 1 to 16 which is connected to the heating circulation (20);
17.6. a heating circulation manifold (24) and/or heating circulation valves (25) which is/are connected to the heating circulation (20), for selective setting of the flow of the heating carrier through the heating circulation (20).

18. A heating system according to claim 17, **characterized in that** the heating circulation manifold (24) and/or the heating circulation valves (25) is/are adjustable for three switching phases:
18.1. a first switching phase, the desorption phase, In which a first flow circulation of the heat-transfer medium is produced between the high-temperature source (21) and the adsorber/desorber unit (2) and a second flow circulation of the heat-transfer medium between the condenser/evaporator unit (6) and the heating device (23);
18.2. a second switching phase, the adsorption phase, in which a first flow circulation of the heat-transfer medium is set between the heating device (23) and the adsorber/desorber unit (2) and a second flow circulation of the heat-transfer medium between the low-temperature source (22) and the condenser/evaporator unit (6);
18.3. a third switching phase, the bypass phase, in which a flow circulation of the heat-transfer medium is set between the high-temperature source (21) and the heating device (23).

## Revendications

1. Pompe à chaleur à sorption à matériau solide (1) comprenant:
1.1 une unité d'adsorbeur-désorbeur (2) avec un échangeur de chaleur (3) et un matériau de sorption solide (4) ;
1.2 l'unité d'adsorbeur-désorbeur (2) est disposée dans un boîtier commun (5), étanche vis-à-vis de l'environnement, avec une unité de condenseur-évaporateur (6), l'unité d'adsorbeur-désorbeur (2) et l'unité de condenseur-évaporateur (6) étant séparées l'une de l'autre par un élément perméable à l'adsorption (7) ;
**caractérisée en ce que**
1.3 l'unité d'adsorbeur-désorbeur (2) comprend un élément formant réceptacle (9) conducteur de chaleur, qui est disposé dans une liaison conductrice de chaleur avec l'échangeur de chaleur (3) ;
1.4 l'élément formant réceptacle (9) abrite le matériau de sorption (4) ;
1.5 l'élément formant réceptacle (9) confère sa stabilité à l'unité d'adsorbeur-désorbeur (2) ;
1.6 l'espace intérieur du boîtier commun (5) se trouve sous une dépression et le boîtier commun (5) est réalisé comme une enveloppe de tôle à parois minces, qui est posée sur l'élément formant réceptacle (9) de telle façon que les forces d'affaissement produites par la dépression soient évacuées vers l'élément formant réceptacle (9) et/ou l'échangeur de chaleur (3) et l'unité de condenseur-évaporateur (6).

2. Pompe à chaleur à sorption à matériau solide selon la revendication 1, **caractérisée en ce que** l'unité de condenseur-évaporateur (6) est disposée dans le boîtier commun (5) en dessous de l'unité d'adsorbeur-désorbeur (2).

3. Pompe à chaleur à sorption à matériau solide selon l'une des revendications 1 ou 2, **caractérisée en ce que** l'élément perméable à l'adsorption (7) est conformé comme une éponge perméable à la vapeur, en particulier une éponge en céramique (8), qui crée une distance prédéterminée entre l'unité d'adsorbeur-désorbeur (2) et l'unité de condenseur-évaporateur (6).

4. Pompe à chaleur à sorption à matériau solide selon l'une des revendications 1 à 3, **caractérisée en ce que** l'unité de condenseur-évaporateur (6) comprend un élément formant réceptacle (10) de même nature que l'unité d'adsorbeur-désorbeur (2), qui est conformé de telle manière qu'il reçoit des tubes de condensation et d'évaporation (11) parcourus par un caloporteur destinés à évacuer la chaleur de condensation et à amener la chaleur d'évaporation et confère sa stabilité structurelle à l'unité de condenseur-évaporateur.

5. Pompe à chaleur à sorption à matériau solide selon l'une des revendications 1 à 4, **caractérisée en ce que** l'élément formant réceptacle (9, 10) est réalisé comme une construction à lamelles ou comme une éponge métallique.

6. Pompe à chaleur à sorption à matériau solide selon l'une des revendications 4 ou 5, **caractérisée en ce que** le boîtier commun (5) est posé sur l'élément formant réceptacle (9, 10) et en particulier sur des parties de l'échangeur de chaleur (3) et des tubes de condensation et d'évaporation (11) de telle manière que les forces d'affaissement produites par la dépression solent évacuées vers l'élément formant réceptacle (9, 10) et/ou l'échangeur de chaleur (3) et les tubes de condensation et d'évaporation (11).

7. Pompe à chaleur à sorption à matériau solide selon l'une des revendications 4 à 6, **caractérisée en ce que** l'échangeur de chaleur (3) et les tubes de condensation et d'évaporation (11) sont conformés chacun sous la forme d'une ou plusieurs boucles de tuyaux, chaque boucle de tuyau comprenant une pluralité de tronçons de tuyau (12) disposés horizontalement, qui sont reliés entre eux à leurs extrémités horizontales par des renvois (13) de façon à acheminer le caloporteur.

8. Pompe à chaleur à sorption à matériau solide selon les revendications 6 et 7, **caractérisée en ce que** l'enveloppe de tôle est posée par l'extérieur sur les renvois (13).

9. Pompe à chaleur à sorption à matériau solide selon l'une des revendications 1 à 8, **caractérisée en ce que** l'élément de support (9) et/ou l'échangeur de chaleur de l'unité d'adsorbeur-désorbeur (2) sont revêtus du matériau de sorption solide (4).

10. Pompe à chaleur à sorption à matériau solide selon l'une des revendications 1 à 9, **caractérisée en ce que** le boîtier commun (5) est conformé comme un boîtier à deux coques dont l'espace intermédiaire compris entre les coques est rempli d'un matériau transmettant les forces de pression et isolant thermique, en particulier de granulés en vrac (14), et **en ce que** le vide est créé dans l'espace intermédiaire entre les coques.

11. Pompe à chaleur à sorption à matériau solide (1), comprenant ;
11.1 une unité d'adsorbeur-désorbeur (2) avec un échangeur de chaleur (3) et un matériau de sorption solide (4) ;
11.2 une unité de condenseur-évaporateur (6) ;
**caractérisée en ce que**
11.3 l'unité d'adsorbeur-désorbeur (2) comprend un élément formant réceptacle (9) conducteur thermique, disposé dans une liaison conductrice de chaleur avec l'échangeur de chaleur (3) ;
11.4 l'élément formant réceptacle (9) abrite le matériau de sorption (4) ;
11.5 l'élément formant réceptacle (9) confère sa stabilité à l'unité d'adsorbeur-désorbeur (2) ;
11.6 l'unité de condenseur-évaporateur (6) comprend un élément formant réceptacle (10) conducteur thermique construit de telle manière qu'il reçoit des tubes de condensation et d'évaporation (11) parcourus par un caloporteur destinés à évacuer la chaleur de condensation et à amener la chaleur d'évaporation et confère sa stabilité structurelle à l'unité de condenseur-évaporateur (6) ;
11.7 l'unité d'adsorbeur-désorbeur (2) est disposée dans un premier boîtier (5.1) étanche vis-à-vis de l'environnement et l'unité de condenseur-évaporateur (6) dans un deuxième boîtier (5.2) étanche vis-à-vis de l'environnement, les espaces intérieurs des boîtiers (5.1, 5.2) se trouvant sous une dépression et étant reliés l'un avec l'autre au moyen d'au moins une liaison acheminant de la vapeur ;
11.8 les boîtiers (5.1, 5.2) sont réalisés comme des enveloppes de tôle à parois minces qui sont posées sur l'élément formant réceptacle (9, 10) de telle manière que les forces d'affaissement créées par la dépression soient évacuées vers l'élément formant réceptacle (9, 10) et/ou l'échangeur de chaleur (3) et les tubes de condensation et d'évaporation (11).

12. Pompe à chaleur à sorption à matériau solide selon la revendication 11, **caractérisée en ce que** l'élément formant réceptacle (9, 10) est réalisé comme une construction à lamelles ou comme une éponge métallique.

13. Pompe à chaleur à sorption à matériau solide selon l'une des revendications 11 ou 12, **caractérisée en ce que** l'échangeur de chaleur (3) et les tubes de condensation et d'évaporation (11) sont conformés chacun sous la forme d'une ou plusieurs boucles de tuyaux, chaque boucle de tuyau comprenant une pluralité de tronçons de tuyau (12) disposés horizontalement, qui sont reliés entre eux à leurs extrémités horizontales par des renvois (13) de façon à acheminer le caloporteur.

14. Pompe à chaleur à sorption à matériau solide selon les revendications 12 et 13, **caractérisée en ce que** les enveloppes de tôle sont posées par l'extérieur sur les renvois (13).

15. Pompe à chaleur à sorption à matériau solide selon l'une des revendications 12 à 14, **caractérisée en ce que** l'élément de support (9) et/ou l'échangeur de chaleur de l'unité d'adsorbeur-désorbeur (2) sont revêtus du matériau de sorption solide (4).

16. Pompe à chaleur à sorption à matériau solide selon l'une des revendications 12 à 15, **caractérisée en ce que** les boîtiers (5.1, 5.2) sont conformés comme des boîtiers deux coques dont l'espace intermédiaire compris entre les coques est rempli d'un matériau transmettant les forces de pression et isolant thermique, en particulier de granulés en vrac (14), et **en ce que** le vide est créé dans l'espace intermédiaire entre les coques.

17. Système de chauffage comprenant :
17.1 un circuit de chauffage (20) parcouru par un caloporteur ;
17.2 une source à haute température (21) raccordée au circuit de chauffage (20), pour amener de la chaleur dans le caloporteur à un premier niveau de température prédéterminé ;
17.3 une source à basse température (22) raccordé eau circuit de chauffage (20), pour amener de la chaleur dans le caloporteur à un deuxième niveau de température prédéterminé inférieur au premier niveau de température ;
17.4 un dispositif de chauffage (23) raccordé au circuit de chauffage (20), pour extraire de la chaleur du caloporteur Jusqu'à un troisième niveau de température prédéterminé situé entre le premier niveau de température et le deuxième ;
17.5 une pompe à chaleur à sorption à matériau solide (1) selon l'une des revendications 1 à 16, qui est raccordée au circuit de chauffage (20) ;
17.6 un distributeur de circuit de chauffage (24) et/ou des vannes de circuit de chauffage (25), qui sont raccordés au circuit de chauffage (20), pour l'ajustement sélectif de la circulation du caloporteur à travers le circuit de chauffage (20).

18. Système de chauffage selon la revendication 17, **caractérisée en ce que** le distributeur de circuit de chauffage (24) et/ou les vannes de circuit de chauffage (25) sont réglables pour trois phases de commutation :
18.1 une première phase de commutation (phase de désorption) dans laquelle un premier circuit d'écoulement du caloporteur est établi entre la source à haute température (21) et l'unité d'adsorbeur-désorbeur (2) et un deuxième circuit d'écoulement du caloporteur entre l'unité de condenseur-évaporateur (6) et le dispositif de chauffage (23) ;
18.2 une deuxième phase de commutation (phase d'adsorption) dans laquelle un premier circuit d'écoulement du caloporteur est établi entre le dispositif de chauffage (23) et l'unité d'adsorbeur-désorbeur (2) et un deuxième circuit d'écoulement du caloporteur entre la source à basse température (22) et l'unité de condenseur-évaporateur (6) ;
18.3 une troisième phase de commutation (phase de dérivation) dans laquelle un circuit d'écoulement est établi entre la source à haute température (21) et le dispositif de chauffage (23).
